# EUROPÄISCHE PATENTSCHRIFT

(11) **EP 1 122 359 B1**
(45) Veröffentlichungstag und Bekanntmachung des Hinweises auf die Patenterteilung: **25.05.2005**
(21) Anmeldenummer: 01101554.2
(22) Anmeldetag: 25.01.2001
(51) Int. Cl.: D21D 5/16

(54) **Sieb und Verfahren zur Herstellung eines derartigen Siebes**
Screen and method for manufacturing the same
Tamis et son procédé de fabrication

(30) Priorität: 03.02.2000 AT 1652000
(43) Veröffentlichungstag der Anmeldung: 08.08.2001
(73) Patentinhaber: Andritz AG, 8045 Graz (AT)
(72) Erfinder: Gabl, Helmut, Dipl. Ing. Dr., 8046 Graz (AT); Pichler, Axel, Dipl. Ing., 8020 Graz (AT)
(74) Vertreter: Schweinzer, Friedrich

(56) Entgegenhaltungen:
- EP-A- 0 499 154
- DE-A- 4 435 538

## Beschreibung

Die Erfindung betrifft ein flaches oder zylinderförmiges Sieb bestehend aus Stäben und stabtragenden Unterstützungselementen, wobei die Stäbe an den Seitenwänden mit Ausbuchtungen versehen sind, die in entgegengesetzt ausgebildete Ausnehmungen im Unterstützungselement eingreifen. Weiters betrifft die Erfindung ein Verfahren zur Herstellung eines derartigen Siebes.

Es sind verschiedene Arten von Sieben bekannt, so z.B. aus der WO 98/14658. Hier wird ein Sieb beschrieben, das aus einer Anzahl von Stäben und Unterstützungselementen besteht, wobei in den Unterstützungselemente Schlitze angebracht sind. Die Unterstützungselemente weisen hier die Form eines U-Profils auf, so dass zur Befestigung der Stäbe an den Unterstützungselementen ein Teil dieser Stäbe plastisch deformiert wird. Eine andere Art von Sieben ist aus der DE 44 35 538 A1 bekannt. Auch hier sind wieder Stäbe und stabtragende Unterstützungselemente vorgesehen, wobei die Befestigung der Stäbe formschlüssig durch Klemmung aufgrund plastischer Verformung der stabtragenden Elemente erfolgt. Weiters sind flache oder zylinderförmige (zentripedal oder zentrifugal) Siebe bekannt, bei denen die Stäbe durch Schweißen an den stabtragenden Elementen angeordnet sind. Diese Art der Befestigung führt jedoch zu einer Reihe von Nachteilen, da beim Schweißen große Schweißspannungen auf das Bauteil übertragen werden, die zu einem Verziehen des gesamten Siebkörpers führen können. Auch ist die Befestigung nicht immer gewährleistet, da es unter bestimmten Umständen und im Laufe der Zeit aufgrund von Verschleißerscheinungen zu einem Auflösen der Schweißnähte kommen kann. Auch die Fertigung selbst ist an und für sich sehr umständlich und zeitaufwendig, wobei es speziell sehr schwierig ist, die Stützweite zwischen zwei benachbarten Siebstäben genau einzustellen.

Weiters zeigt die EP 499 154 A1 (Voith) einen Siebkorb, bei dem Stäbe mit Ausbuchtungen vorgesehen sind. Diese Ausbuchtungen werden jedoch beim Zusammenbau verformt, wobei die Vorsprünge nicht mit den Ausnehmungen übereinstimmen. Es tritt somit beim Zusammenbau eine plastische Verformung auf, wobei die richtige Lage der Stäbe zueinander vorher nicht eindeutig definiert ist und somit leicht Ungenauigkeiten auftreten können.

Ziel der vorliegenden Erfindung ist es deshalb, ein Sieb zu schaffen, das ohne plastische Verformung der Stäbe bzw. Unterstützungselemente und ohne Schweißung auskommt. Weiters soll ein einfaches Herstellungsverfahren für ein derartiges Sieb geschaffen werden, bei dem eine gute Genauigkeit der Position der Stäbe erreicht wird.

Die Erfindung ist daher dadurch gekennzeichnet, dass, die Ausbuchtungen kreis- oder ellipsenförmig ausgebildet sind und vorzugsweise einen Radius r mit 0,1 mm < r < 2 mm aufweisen. Damit kann durch Formschluss eine feste Verbindung geschaffen werden, ohne Erfordernis einer Schweißung oder ohne plastische Verformung und es ist möglich die Stäbe ohne Verformung der Stützelemente einfach zu montieren, wobei auch eine günstige Fertigung möglich ist. Die Stäbe können einfach eingelegt werden, wobei die kreis- oder ellipsenförmig ausgebildeten Ausbuchtungen eine gleichmäßigere Flächenpressung und somit einen sehr guten Formschluss mit den Unterstützungselementen ergeben.

Eine vorteilhafte Ausgestaltung der Erfindung ist dadurch gekennzeichnet, dass die Ausbuchtungen vom strömungsabgewandten Ende des Stabes einen Abstand h₁ von vorzugsweise mindestens 0,1 mm < h₁ < 6 mm aufweisen. Dadurch wird der Stab schwingungsstabiler.

Eine günstige Ausgestaltung der Erfindung ist dadurch gekennzeichnet, dass drei oder mehr Ausbuchtungen bzw. Ausnehmungen auf einer Seitenwand vorgesehen sind. Damit lässt sich ein sicherer Formschluss erzielen.

Eine günstige Weiterbildung der Erfindung ist dadurch gekennzeichnet, dass auf beiden Seiten der Stäbe eine unterschiedliche Anzahl von Ausbuchtungen vorgesehen ist. Dadurch ist bei einseitiger Anströmung eine bessere Fixierungswirkung gewährleistet.

Eine vorteilhafte Weiterbildung der Erfindung ist dadurch gekennzeichnet, daß die Unterstützungselemente eine T- oder I - Form aufweisen. Durch diese Form wird eine größere Siebfläche erreicht.

Eine günstige Ausgestaltung der Erfindung ist dadurch gekennzeichnetm, daß die Stäbe, die eine Gesamthöhe H aufweisen, mit einer Höhe h in das Unterstützungselement hineinragen, wobei das Verhältnis h zu H vorzugsweise größer 0,5 ist. Dadurch ist der Stab besser gegen Strömungskräfte geschützt.

Eine vorteilhafte Ausgestaltung der Erfindung ist dadurch gekennzeichnet, daß das Unterteil des Stabes mit dem Unterstützungselement verpreßt ist. Bei größeren Kräften wird dadurch eine noch bessere Stabilität erreicht.

Die Erfindung betrifft auch ein Verfahren zur Herstellung eines derartigen Siebs, welches dadurch gekennzeichnet ist, daß die Unterstützungselemente elastisch aufgebogen und die Stäbe eingelegt werden, worauf die Unterstützungselemente zurückfedern, die Stäbe formschlüssig umfassen und eine Siebmatte bilden. Dadurch kann in einfacher Weise eine Siebmatte ohne Schweißung oder Verpressen gebildet werden, wobei eine exakte Positionierung der Stäbe möglich und dadurch geringere Toleranzen erzielbar sind.

Eine vorteilhafte Weiterbildung der Erfindung ist dadurch gekennzeichnet, daß die Siebmatte eingerollt und zu einem Zylinder verbunden wird.

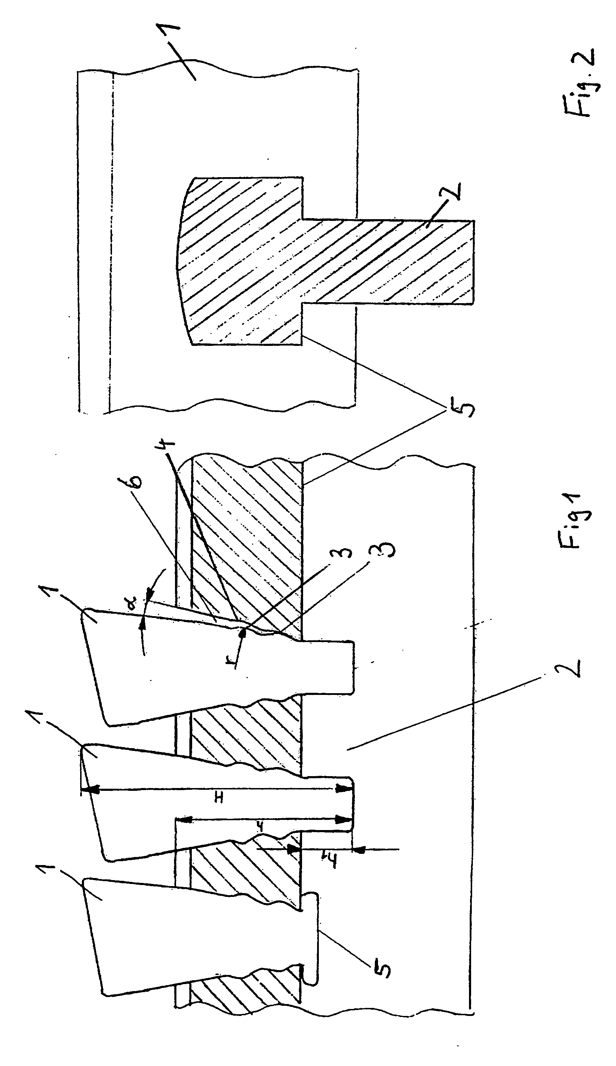

Die Erfindung wird nun an Hand der Zeichnungen beispielhaft erläutert, wobei Fig. 1 eine Variante der Erfindung, Fig. 2 einen Schnitt durch Fig. 1 gemäß Linie II-II zeigt.

Fig. 1 zeigt beispielhaft drei Stäbe 1, die in Unterstützungselementen 2 befestigt sind. Am rechten Stab 1 ist erkennbar, daß dieser auf beiden Seitenwänden mehrere Ausbuchtungen 3 mit einem Radius r aufweist. Im Unterstützungselement sind mit den notwendigen auf den Siebkorbdurchmesser abgestimmten Freistellungsmaßen genau entgegengesetzt ausgebildet Ausnehmungen 4 vorhanden. Es sind hier jeweils zwei Ausbuchtungen bzw. Ausnehmungen je Seite dargestellt, es können jedoch, wenn nötig, auch drei oder mehr derartiger Ausbuchtungen bzw. Ausnehmungen je Seite vorhanden sein. Auch kann die Anzahl der Ausbuchtungen je Seite unterschiedlich sein. Diese kreisoder elipsensegmentförmigen Ausbuchtungen haben einen Radius r, für den gilt 0,1 mm < r < 2 mm. Die Stäbe können einfach eingelegt werden, wobei die kreis- oder elipsenförmig ausgebildeten Ausbuchtungen eine gleichmäßigere Flächenpressung und somit einen sehr guten Formschluß mit den Unterstützungselementen ergeben.
Am mittleren Stab 1 in Fig. 1 sind die Längenabmaße des Stabes dargestellt, der eine Gesamthöhe H aufweist. Die Ausbuchtungen weisen vom strömungsabgewandten Ende des Stabes 1 einen Abstand h₁ auf, für den gilt 0,1 mm < h₁ < 6 mm. Der Stab 1 ragt mit einer Höhe h in das Unterstützungselement hinein, wobei das Verhältnis h zu H vorteilhafterweise größer als 0,5 ist. Der auf der strömungsabgewandten Seite liegende überstehende Teil des Stabes kann für eine bessere Befestigung auf den Flächen 5 des Unterstützungselements verpreßt werden. Dies gilt für eine Ausführung des Unterstützungselements 2 in T-Form. Kommt eine I-Form zur Anwendung, so wird der Stab 1 nicht verpreßt. Statt einer T-oder I-Form kann das Unterstützungselement 2 auch andere Formen, wie z.B. Rechteck, Quadrat, abgerundetes Rechteck oder abgerundetes Quadrat aufweisen, wobei die Abrundung hier auf einer oder mehreren Seiten erfolgen kann. Die für die Aufnahme des Stabes 1 vorgesehenen Ausnehmungen im Unterstützungselement 2 können an der strömungszugewandten Seite Freistellungen vom Winkel α aufweisen. Bei der Zylinderform des Siebkorbes werden damit plastischen Verformungen im Unterstützungselement 2 vermieden.

Fig. 2 zeigt einen Schnitt durch Fig. 1 gemäß II-II, wobei hier die T-Form des Unterstützungselements 2 und ein Stab 1 erkennbar sind. An der Fläche 5 kann dieser Stab 1 gegebenenfalls mit dem Unterstützungselement 2 verpreßt werden.

Die Verbindung zwischen Stäben und Unterstützungselementen erfolgt im wesentlichen formschlüssig, d.h. ohne plastische Verformung der einzelnen Teile bzw. zusätzliche Verbindungen wie Schweißnähte. Die Herstellung eines derartigen Siebes kann z.B. dadurch erfolgen, daß die Stäbe in die Unterstützungselemente hineingedrückt werden, bis sie einrasten. Eine andere Art der Herstellung besteht in einem elastischen Aufbiegen der Unterstützungselemente, so daß sich die Ausnehmungen 6 für die Stäbe erweitern, worauf die einzelnen Stäbe 1 eingelegt werden. Nach dem Zurückfedern der Unterstützungselemente besteht eine plane Siebmatte aus geklemmten Profilstäben. Dieses Verfahren erlaubt durch die erwähnte Ausführung als "Schnappverbindung" das präzise Einlegen der Stäbe 1 in die Unterstützungselemente 2 und damit eine Senkung der Schlitzweitentoleranzen. Wird nun aus dem Plansieb ein Siebkorb gebildet, so wird durch den Biegeradius beim Einrollen die Klemmung zusätzlich erhöht. Auch eine Verpreßung der überstehenden Enden der Stäbe mit den Unterstützungselementen 2 erhöht die Festigkeit der Siebmatte weiters. Als Unterstützungselemente 2 können auch Ringe verwendet werden, in die die erfindunsgemäßen Ausnehmungen 6 eingearbeitet werden, wobei ein gewisses Untermaß verwendet wird, d.h. die Ausnehmungen 6 sind geringfügig kleiner als die Stäbe 1. Anschließend werden die Ringe an einer Stelle aufgeschnitten und soweit aufgebogen, daß die Stäbe 1 einschnappen können. Nach dem Zurückbiegen der Ringe können diese zu einem Korb verschweißt werden.

Die Erfindung ist nicht auf die vorgestellten Beispiele beschränkt, vielmehr kann die Form der Ausbuchtungen 3 der Stäbe 1 beliebig sein, solange sie genau in die entgegengesetzt identischen Ausnehmungen des Unterstützungselements eingreifen. Auch kann die Form der Stäbe 1 von rechteckig bis dreieckig beliebig ausgeführt werden.

## Patentansprüche

1. Flaches oder zylinderförmiges Sieb bestehend aus Stäben und stabtragenden Unterstützungselementen, wobei die Stäbe (1) an den Seitenwänden mit Ausbuchtungen (3) versehen sind, die in entgegengesetzt ausgebildete Ausnehmungen (4) in einem Unterstützungselement (2) eingreifen, **dadurch gekennzeichnet, dass** die Ausbuchtungen (3) kreis- oder ellipsenförmig ausgebildet sind und vorzugsweise ein Radius r mit 0,1 mm < r < 2 mm aufweisen.

2. Sieb nach Anspruch 1, **dadurch gekennzeichnet, dass** die Ausbuchtungen (3) vom strömungsabgewandten Ende des Stabes (1) einen Abstand h₁ von vorzugsweise mindestens 0,1 mm < h₁ < 6 mm aufweisen.

3. Sieb nach Anspruch 1 oder 2, **dadurch gekennzeichnet, dass** drei oder mehr Ausbuchtungen (3) bzw. Ausnehmungen (4) auf einer Seite vorgesehen sind.

4. Sieb nach einem der Ansprüche 1 bis 3, **dadurch gekennzeichnet, dass** auf beiden Seiten der Stäbe (1) eine unterschiedliche Anzahl von Ausbuchtungen (3) vorgesehen ist.

5. Sieb nach einem der Ansprüche 1 bis 4, **dadurch gekennzeichnet, dass** die Unterstützungselemente (2) eine T- oder I-Form aufweisen.

6. Sieb nach einem der Ansprüche 1 bis 5, **dadurch gekennzeichnet, dass** die Stäbe (1), die eine Gesamthöhe H aufweisen, mit einer Höhe h in das Unterstützungselement (2) hineinragen, wobei das Verhältnis h zu H vorzugsweise größer 0,5 ist.

7. Sieb nach einem der Ansprüche 1 bis 6, **dadurch gekennzeichnet, dass** das Unterteil des Stabes mit dem Unterstützungselement (2) verpresst ist.

8. Verfahren zur Herstellung eines Siebes nach einem der Ansprüche 1 bis 7, **dadurch gekennzeichnet, dass** die Unterstützungselemente (2) elastisch aufgebogen und die Stäbe (1) eingelegt werden, worauf die Unterstützungselemente (2) zurückfedern, die Stäbe (1) formschlüssig umfassen und eine Siebmatte bilden.

9. Verfahren nach Anspruch 8, **dadurch gekennzeichnet, dass** die Siebmatte eingerollt und zu einem Zylinder verbunden wird.

## Claims

1. Flat or cylindrical screen, comprising rods and rod-bearing supporting elements, with the rods (1) having projections (3) in the side walls which gear into inversely shaped recesses (4) in a supporting element (2), **characterised by** the projections (3) being circular or elliptical and preferably having a radius r of 0.1 mm < r < 2 mm.

2. Screen according to Claim 1, **characterised by** the spacing h₁ between the projections (3) and the end of the rod (1) facing away from the flow preferably measuring at least 0.1 mm < h₁ < 6 mm.

3. Screen according to Claim 1 or 2, **characterised by** three or more projections (3) and recesses (4) being provided on one side.

4. Screen according to one of Claims 1 to 3, **characterised by** a different number of projections (3) being provided on the two sides of the rods (1 ).

5. Screen according to one of Claims 1 to 4, **characterised by** the supporting elements (2) having a T or I shape.

6. Screen according to one of Claims 1 to 5, **characterised by** the rods (1), which have a total height H, protruding into the supporting element (2) to a height h, where the ratio of h to H is preferably greater than 0.5.

7. Screen according to one of Claims 1 to 6, **characterised by** the bottom part of the rod being pressed together with the supporting element (2).

8. Process for manufacture of a screen according to one of Claims 1 to 7, **characterised by** the supporting elements (2) being bent elastically and the rods (1) inserted, whereupon the supporting elements (2) spring back, have a positive fit around the rods (1) and form a screen mat.

9. Process according to Claim 8, **characterised by** the screen mat being rolled together to form a cylinder.

## Revendications

1. Crible plat ou cylindrique, comportant des barres et des éléments de support pour les barres, où les barres (1) ont des projections (3) aux parois latérales qui engrènent dans des creux (4) de forme inverse prévus sur un élément de support (2), **caractérisé en ce que** les projections (3) sont circulaires ou elliptiques et ont de préférence un rayon r de 0,1 mm < r < 2 mm.

2. Crible selon la revendication 1, **caractérisé en ce que** l'écart h₁ entre les projections (3) et le bout de la barre (1) au côté opposé à l'écoulement mesure de préférence au moins 0,1 mm < h₁ < 6 mm.

3. Crible selon la revendication 1 ou 2, **caractérisé en ce que** trois projections (3) ou plus ainsi que des creux (4) sont prévus sur un côté.

4. Crible selon l'une des revendications 1 à 3, **caractérisé en ce que** le nombre des projections (3) sur les deux côtés des barres (1) diffère.

5. Crible selon l'une des revendications 1 à 4, **caractérisé en ce que** les éléments de support (2) sont de forme en T ou I.

6. Crible selon l'une des revendications 1 à 5, **caractérisé en ce que** les barres (1), dont la hauteur totale est H, projètent dans l'élément de support (2) jusqu'à à une hauteur h, le rapport entre h et H dépassant, de préférence, 0,5.

7. Crible selon l'une des revendications 1 à 6, **caractérisé en ce que** la partie inférieure de la barre est comprimée avec l'élément de support (2).

8. Procédé de fabrication d'un crible selon l'une des revendications 1 à 7, **caractérisé en ce que** les éléments de support (2) sont dépliés élastiquement et les barres (1) sont insérées, sur quoi les éléments de support (2) rebondissent, engagent les barres (1) positivement et forment une natte de crible.

9. Procédé selon la revendication 8, **caractérisé en ce que** la natte de crible est enroulée et jointe en forme d'un cylindre.
